Europäisches Patentamt

**European Patent Office**

**Office européen des brevets**

(19)

(11) Numéro de publication: **0 118 650**
**A2**

## (12) DEMANDE DE BREVET EUROPEEN

(21) Numéro de dépôt: **83810136.8**

(22) Date de dépôt: **07.04.83**

(51) Int. Cl.³: **B 60 R 21/10**

(30) Priorité: **10.03.83 CH 1284/83**

(43) Date de publication de la demande:
**19.09.84 Bulletin 84/38**

(84) Etats contractants désignés:
**AT BE DE FR GB IT LU NL SE**

(71) Demandeur: **Allied Engineering Company S.A.**
**15, Boulevard Roosevelt**
**Luxembourg(LU)**

(72) Inventeur: **Seiler, Martin**
**3, Avenue du Nail**
**CH-1204 Genève(CH)**

(74) Mandataire: **Baggiolini, Raimondo et al,**
**Racheli & Fiammenghi Via San Gottardo 15**
**CH-6900 Lugano(CH)**

(54) Bobine d'enroulement pour ceintures de sécurité de véhicules automobiles.

(57) Bobine comprenant un corps de support (2), un arbre (3) qui tourne dans le corps de support, arbre dont l'extrémité s'étend longitudinalement en porte-à-faux jusqu'à l'extérieur du corps de support et qui est relié en son centre à une extrémité d'une ceinture de sécurité; des moyens de blocage (20, 25, 32) destinés à arrêter la rotation de l'arbre soit sous l'effet d'une brusque accélération angulaire imprimée à l'arbre de la ceinture (3), soit sous l'effet d'une accélération linéaire imprimée au corps de support (2) suivant une direction quelconque.

Le corps de support (2) présente deux plaques (7) et (8) chacune munie d'une paire de trous taraudés (11) destinés à recevoir des vis (12) de fixation d'un couvercle latéral (13). Une plaque (7) comporte deux séries de trous taraudés (14), concentriques à l'axe de rotation de l'arbre (3), ces trous étant séparés les uns des autres par une série de trous (15) de plus grand diamètre, qui sont eux aussi concentriques à l'axe de rotation de l'arbre (3).

FIG. 2

EP 0 118 650 A2

0118650

"Bobine d'enroulement pour ceintures de sécurité de véhicules automobiles"

La présente invention se rapporte aux bobines connues d'enroulement pour ceintures de sécurité de véhicules automobiles, ces bobines comprenant un corps de support, un arbre qui tourne dans ce corps de support et qui est relié en son centre à une extrémité d'une ceinture de sécurité, les moyens de blocage destinés à arrêter la rotation de l'arbre soit sous l'effet d'une brusque accélération angulaire imprimée à l'arbre de la ceinture, soit sous l'effet d'une accélération linéaire imprimée au corps de support suivant une direction quelconque, lesdits moyens de blocage comprenant une roue dentée munie d'une couronne de dents avant et montée sur une extrémité de l'arbre avec un accouplement hélicoïdal, un anneau denté muni extérieurement d'une denture radiale d'arrêt et porté coaxialement par la roue dentée, une denture frontale portée par le corps de support et destinée à venir en prise avec les dents de ladite roue dentée sous l'effet du déplacement longitudinal de ladite roue par rapport à l'arbre tournant, ce déplacement étant dû à l'accélération angulaire et audit accouplement hélicoïdal, un cliquet articulé sur le corps de support et destiné à venir en prise avec la denture radiale d'arrêt dudit anneau denté sous l'effet de ladite accélération linéaire.

L'invention vise une bobine d'enroulement d'un tel type, pouvant s'adapter facilement aux divers modèles de véhicules automobiles sans nécessité de modifications dans la construction.

De façon plus précise, l'invention a pour objet une bobine d'enroulement du type défini ci-dessus, caractérisés par le fait que la denture frontale d'arrêt et le pivot d'articulation du cliquet sont portés par un couvercle fixé au corps de support et coaxial à ce dernier, et par le fait qu'il est prévu des moyens servant à fixer ce couvercle au corps de support suivant diverses positions angulaires, ainsi que des moyens servent à faire varier l'orientation du pivot d'articulation du cliquet par rapport au couvercle par rotation de ce pivot dans les deux sens autour d'un axe perpendiculaire à l'axe de l'arbre, à partir d'une position centrale à laquelle l'axe de ce pivot est parallèle à l'axe de cet arbre.

Suivant une caractéristique avantageuse de l'invention, l'anneau denté muni de la denture radiale d'arrêt est monté de façon à tourner avec frottement sur la roue dentée.

Grâce à une telle caractéristique, on obtient cet avantage que, dans le cas d'un déplacement longitudinal de la roue dentée par rapport à l'arbre tournant sous l'effet de l'engagement du cliquet dans la denture d'arrêt de l'anneau denté, les dents avant de la roue dentée se placent toujours en position correcte par rapport à la denture frontale d'arrêt portée par le couvercle fixé au corps de support, de manière à s'engager dans un siège compris entre deux dents successives de cette denture, ce qui empêche les chocs et assure un blocage sûr de la ceinture de sécurité.

L'invention vise également une bobine d'enroulement du type défini ci-dessus, dans laquelle le déplacement longitudinal de la roue dentée par rapport à l'arbre tournant est assuré à l'aide d'un nombre réduit de pièces de façon simple et sûre.

On obtient ce résultat grâce au fait que l'extrémité de l'arbre s'étend longitudinalement en porte-à-faux jusqu'à l'extérieur du corps de support, ladite extrémité comprenant une partie de plus grand diamètre, dans laquelle est pratiquée une couronne périphérique de dents frontales séparées les unes des autres par des surfaces inclinées qui vont de la base de chacune des dents jusqu'à peu près à mi-hauteur de la dent suivante, et une partie terminale de diamètre réduit, dirigée vers l'extérieur à partir du sommet des dents, et par le fait que la roue dentée présente, sur sa face tournée vers le corps de support, une couronne périphérique de dents frontales qui s'engagent dans les vides compris entre les dents frontales portées par l'extrémité de l'arbre et qui ont chacune une amplitude angulaire plus petite que celle du vide correspondant, de telle sorte que le déplacement angulaire relatif entre la roue dentée et l'arbre provoque un déplacement longitudinal de la roue dentée par rapport à cet arbre, les deux positions angulaires extrèmes de la roue dentée par rapport à l'arbre étant déterminées par l'interraction entre les flancs des dents de la roue et les

- 3 -                                    0118650

flancs des dents de l'extrémité de l'arbre.

D'autres avantages et caractéristiques de l'invention ressortiront de la description qui va suivre, faite en regard des dessins annexés et donnant, à titre explicatif mais nullement limitatif, une forme de réalisation.

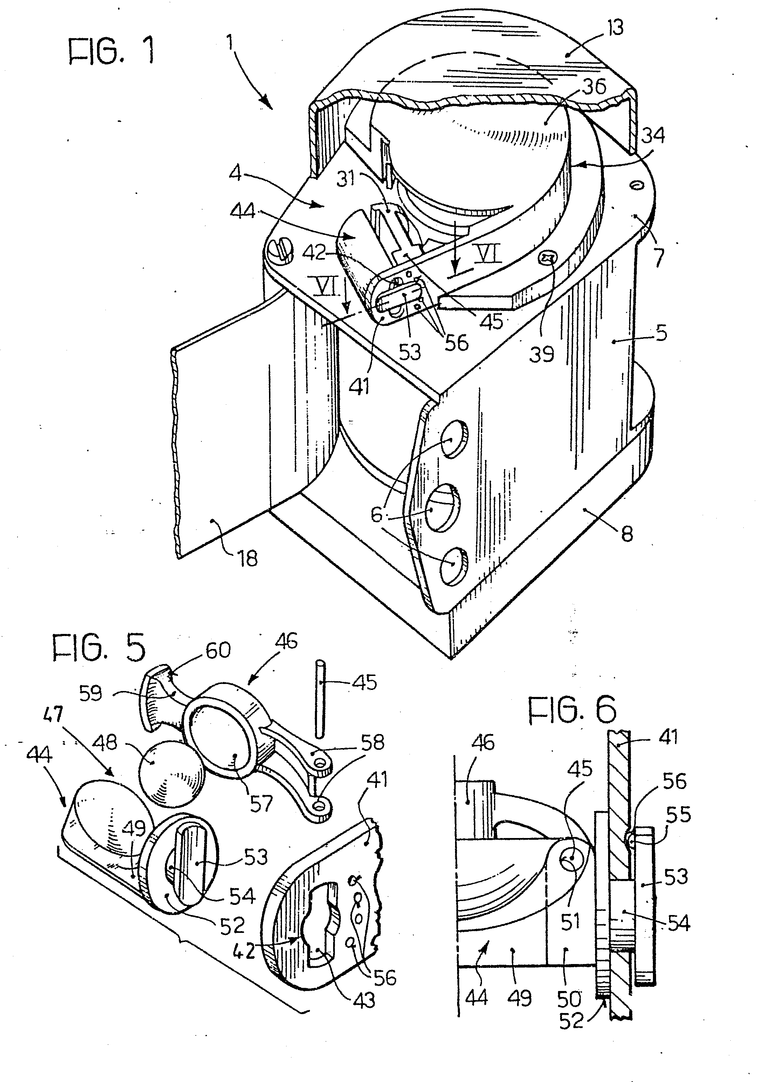

Sur ces dessins, la figure 1 est une vue en perspective, avec arrachement partiel, d'une bobine d'enroulement selon l'invention ;

la figure 2 est une vue en perspective éclatée de cette bobine ;

les figures 3, 4 et 5 sont des vues en perspective, à plus grande échelle, les détails de la figure 2 ;

et la figure 6 est une vue en coupe suivant la ligne VI de la figure 1.

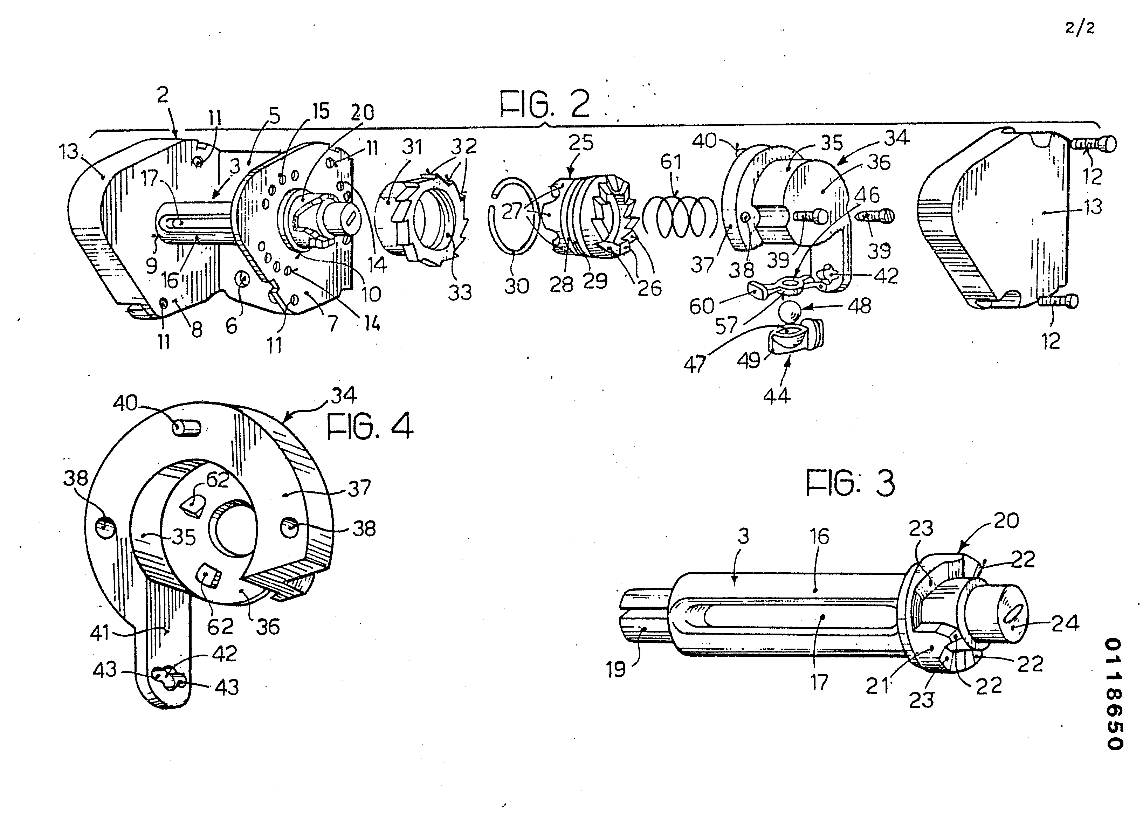

La référence 1 (figures 1 et 2) désigne, dans son ensemble, une bobine d'enroulement pour ceinture de sécurité de véhicules automobiles, comprenant un corps de support 2, un arbre 3 qui tourne dans ce corps de support et des moyens servant à bloquer la rotation de cet arbre 3 ces moyens étant désignés dans leur ensemble par la référence 4.

Le corps de support 2 est constitué par une plaque de base 5, dans laquelle sont pratiqués trois trous 6 servant à sa fixation sur la caisse du véhicule automobile et par deux plaques 7 et 8 fixées perpendiculairement aux extrémités opposées de cette plaque de base 5.

Chacune des plaques 7 et 8 présentent, en son centre, un trou circulaire 9, muni intérieurement d'un manchon en une matière plastique 10, traversé par une extrémité de l'arbre 3.

En outre, chacune des plaques 7 et 8 est munie d'une paire de trous taraudés 11 destinés à recevoir des vis 12 de fixation d'un couvercle latéral 13.

La plaque 7 comporte deux séries de trous taraudés 14, concentriques à l'axe de rotation de l'arbre 3, ces trous étant séparés les uns des autres par une série de trous 15 de plus grand diamètre, qui sont eux aussi concentriques à l'axe de rotation de l'arbre 3.

Cet arbre 3, comme représenté de façon détaillée sur la figure 3, présente une partie centrale 16 dans laquelle est pratiquée une entaille longitudinale 17 servant à attacher une extrémité d'une ceinture de sécurité 18.

La référence 19 désigne une extrémité de diamètre réduit de l'arbre 3, qui traverse le trou circulaire 9 de la plaque 8 et qui s'étend jusqu'à l'extérieur du corps de support 2. Cette extrémité 19 est reliée à un ressort hélicoïdal (non représenté) qui permet le réenroulement automatique de la ceinture de sécurité sur l'arbre 3.

La référence 20 désigne l'extrémité opposée de l'arbre 3 qui traverse le trou circulaire 9 pratiqué dans la plaque 7 et qui s'étend en porte-à-faux à l'extérieur du corps de support 2.

L'extrémité 20 comprend une partie 21 de plus grand diamètre, voisine de la plaque 7, dans laquelle se trouve une couronne périphérique de quatre dents avant 22. Ces dents avant sont réparties angulairement de façon régulière et elles sont séparées par autant de surfaces inclinées 23, qui vont de la base de chacune des dents 22 jusqu'à environ la mi-hauteur de la dent 22 suivante.

La référence 24 désigne une partie extrême, de plus petit diamètre de l'extrémité 20, s'étendant vers l'extérieur à partir du sommet des dents avant 22.

La référence 25 désigne une roue dentée traversée, en son centre, par la partie extrême 24 de l'extrémité 20 de l'arbre 3. Cette roue 25 comporte, sur sa face tournée vers l'extérieur, une couronne de dents avant 26 formant un profil de scie, tandis que sur sa face opposée se trouve une couronne périphérique de quatre dents avant 27, réparties angulairement de façon régulière.

Les dents avant 27 s'engagent dans les vides compris entre les dents frontales 22 de l'extrémité 20 de l'arbre 3 et elles sont moins grandes que le vide correspondant.

La roue 25 peut se déplacer longitudinalement par rapport à l'arbre, entre une position de repos, à laquelle les flancs des dents 27 sont appliquées contre les flancs des dents 22 à la base des surfaces inclinées 23 et une position, résultant d'un déplacement angulaire entre la roue 25 et l'arbre 3, à laquelle les flancs des dents 27 sont appliqués contre les flancs des dents 22, au sommet des surfaces inclinées 23.

La roue dentée 25 comporte une rainure périphérique annulaire 29 pratiquée sur sa surface externe dans une partie 28 comprise entre les dents 26 et les dents avant 27.

La référence 30 désigne un anneau dilatable élastiquement, logé à l'intérieur de cette rainure annulaire 29.

La référence 31 désigne un anneau monté de façon à pouvoir tourner avec frottement sur la roue dentée 25 et muni extérieurement d'une denture radiale d'arrêt 32 à profil de scie. L'anneau denté 31 est muni d'une rainure annulaire 33 pratiquée dans sa surface interne, destinée à recevoir l'anneau élastique dilatable 30 logé dans la rainure annulaire 29. La référence 34 désigne un couvercle fixé sur la plaque 7 du corps de support 2 et coaxial à l'arbre 3. Le couvercle 34, comme représenté de façon détaillée sur la figure 4, comprend une paroi latérale semi-cylindrique 35, fermée, à une extrémité, par un fond 36 qui comporte intérieurement quatre dents avant d'arrêt 62, réparties angulairement de façon régulière et dirigées vers le corps de support 2.

Cette paroi semi-cylindrique 35 comporte, lelong d'une partie de son bord libre d'extrémité, une bride radiale 37 servant à la fixation du corps de support. Cette bride 37 est munie de deux trous extrêmes 38, diamétralement opposés et dirigés longitudinalement, servant au passage de deux vis 39 et d'un appendice cylindrique 40 dirigé longitudinalement, tourné vers le corps de support 2.

Ces vis 39 et l'appendice longitudinal 40 peuvent être engagés à volonté respectivement dans les trous taraudés 14 et dans les trous 15 pratiqués dans la plaque 7, ce qui permet de faire varier la position angulaire de montage du couvercle 34 par rapport au corps de support 2.

La référence 41 désigne un appendice plat qui part tangentiellement d'une extrémité libre de la paroi latérale 35.

Cet appendice 41 présente, au voisinage de son extrémité libre, un trou 42 de forme allongée, dirigé transversalement et présentant une partie centrale 43 de profil circulaire. Dans ce trou 42 s'engage, par emboîtement à baïonnette , un support 44 qui porte le pivot d'articulation 45 d'un cliquet 46.

Ce support 44 est obtenu par estampage d'une matière plastique, comme représenté de façon détaillée sur les figures 5 et 6, et il comprend une cuvette émisphérique 47 contenant une bille métallique 48 et reliée, au moyen d'une nervure extérieure 49, à une tige cylindrique 50 traversée, dans sa partie supérieure, par un trou 51 orienté parallèlement au bord de cette cuvette 47.

Cette tige cylindrique 50 est reliée, à son extrémité libre, à un collier transversal d'arrêt 52, de diamètre supérieur à celui du siège circulaire 42 et à une lamelle élastique 53, ce collier 52 et cette lamelle 53 étant parallèles entre eux et séparés par une partie cylindrique 54.

La lamelle élastique 53 est de forme rectangulaire et ses petits côtés sont arrondis ; elle présente sur sa face interne une série de saillies ou bossages 55.

A la position montée, représentée sur la figure 1, cette lamelle élastique 53 traverse le trou 42 et elle est orientée de manière telle que les saillies 55 puissent être engagées à volonté d'un coup sec dans une série de sièges 56 concentriques au trou 42 pratiqué dans l'appendice plat 41.

Le cliquet 46 comprend une cuvette centrale hémisphérique 57 située en face de la cuvette hémisphérique 47 du support 44 et reliée le long de son bord extérieur, à une petite fourche 58 qui porte le pivot d'articulation 45.

La référence 59 désigne un appendice relié en porte-à-faux au bord extérieur de la cuvette hémisphérique 57 par la partie opposée à la fourche 56. Cet appendice 59 présente un bord extrême 60 arrondi qui vient en prise avec la denture radiale d'arrêt 32 de l'anneau denté 31.

Comme cela ressort clairement de la description qui précède, le support 44 peut être fixé à l'appendice plat 41 du couvercle 34, de façon que l'on puisse faire varier l'orientation du pivot d'articulation 45 du cliquet 46 autour d'un axe perpendiculaire à l'axe de l'arbre 3, à partir d'une position centrale à laquelle ce pivot 45 est parallèle à l'axe de l'arbre 3, comme représenté sur la figure 1.

La référence 61 désigne, enfin, un ressort hélicoïdale qui réagit élastiquement entre le couvercle 34 et la roue dentée 25, lorsqu'il se produit un déplacement longitudinale de ce trou denté 25 par rapport à l'arbre 3.

A la position montée de la bobine d'enroulement 1 à l'intérieur de la caisse du véhicule automobile, l'axe de rotation de l'arbre 3 est orienté suivant la direction de l'axe longitudinal du véhicule ; le couvercle 34 est fixé au corps de support 2 de manière à maintenir le cliquet en position horizontale, parallèlement à l'axe transversal du véhicule automobile, et le support 44 est fixé à l'appendice plat 41 suivant une position telle qu'il oriente le pivot d'articulation 45 parallèlement à l'axe longitudinal du véhicule automobile.

La roue dentée 25, l'anneau denté 31, la denture frontale d'arrêt 62 et le cliquet 46 constituent les moyens 4 servant au blocage de la rotation de l'arbre 3 et fonctionnent comme suit.

Lorsque l'arbre 3 subit une brusque accélération angulaire, par exemple sous l'effet d'une traction brutale sur la ceinture 18, due à un choc à l'avant du véhicule, la roue dentée 25, en raison de l'inertie, effectue un déplacement angulaire plus petit que celui de l'arbre 3. Dans ce cas, il se produit un déplacement longitudinal de la roue dentée 25 par rapport à l'arbre 3, sous l'effet du glissement des dents 25 sur les surfaces inclinées 23, ce qui provoque l'engagement, dans la couronne de dents frontales 26 de la roue 27 de la denture frontale d'arrêt 62 portée par le couvercle 34. A cette position, les flancs des dents 27 de la roue dentée 25 viennent s'appliquer contre les flancs des dents 22 au sommet des surfaces inclinées 23, ce qui arrête fermement la rotation de l'arbre 3.

Si la bobine d'enroulement 1 vient à être soumise à une accélération brutale suivant une direction quelconque, par exemple sous l'effet d'un choc subi latéralement par le véhicule automobile, la bille 48 se déplace par inertie à l'intérieur du siège 47 du support 44 et elle provoque, en venant buter contre la paroi intérieure du siège 57, la rotation du cliquet 46 vers le haut autour du pivot d'articulation 45. Sous l'effet de cette rotation, le bord extrème 60 du cliquet 46 vient en prise avec la denture radiale d'arrêt 32 de l'anneau denté 31. Etant donné que, comme décrit plus haut, l'anneau denté 31 est monté de manière à pouvoir tourner avec frottement sur la roue dentée 25, il se produit également dans ce cas, par effet d'inertie, un déplacement longitudinal de cette roue dentée 25 par rapport à l'arbre 3, ce qui provoque l'engagement, dans la couronne de dents frontales 26, de la denture frontale d'arrêt 62. La rotation relative de l'anneau denté 31 et de la roue dentée 25 permet aux dents 26 de s'engager dans un siège compris entre deux dents successives 62, ce qui empêche des chocs et garantit un blocage sûr de la rotation de l'arbre 3.

Ensuite, l'effet des accélérations précédentes ayant cessé, la réaction élastique du ressort hélicoïdal 61 permet à la roue 25 de revenir en position de repos, de telle sorte que l'arbre 3 peut tourner librement.

De la description qui précède, il ressort clairement que la bobine d'enroulement selon l'invention est d'un fonctionnement très sûr, qu'elle est d'une construction relativement simple et peu coûteuse et en outre qu'elle peut s'adapter rapidement à diverses positions de montage.

- 9 -                    0118650

<u>REVENDICATIONS</u>

1. Bobine d'enroulement pour ceintures de sécurité de véhicules automobiles, comprenant un corps de support, un arbre qui tourne dans ce corps de support et qui est relié en son centre à une extrémité d'une ceinture de sécurité, les moyens de blocage destinés à arrêter la rotation de l'arbre soit sous l'effet d'une brusque accélération angulaire imprimée à l'arbre de la ceinture, soit sous l'effet d'une accélération linéaire imprimée au corps de support suivant une direction quelconque, lesdits moyens de blocage comprenant une roue dentée munie d'une couronne de dents avant et montée sur une extrémité de l'arbre avec un accouplement hélicoïdal, un anneau denté muni extérieurement d'une denture radiale d'arrêt et porté coaxialement par la roue dentée, une denture frontale portée par le corps de support et destinée à venir en prise avec les dents de ladite roue dentée sous l'effet du déplacement longitudinal de ladite roue par rapport à l'arbre tournant, ce déplacement étant dû à l'accélération angulaire et audit accouplement hélicoïdal, un cliquet articulé sur le corps de support et destiné à venir en prise avec la denture radiale d'arrêt dudit anneau denté sous l'effet de ladite accélération linéaire, cette bobine d'enroulement étant caractérisée par le fait que la denture frontale d'arrêt et le pivot d'articulation du cliquet sont portés par un couvercle fixé au corps de support et coaxial à ce dernier, et par le fait qu'il est prévu des moyens servant à fixer ce couvercle au corps de support suivant diverses positions angulaires, ainsi que des moyens servant à faire varier l'orientation du pivot d'articulation du cliquet par rapport au couvercle par rotation de ce pivot dans les deux sens autour d'un axe perpendiculaire à l'axe de l'arbre, à partir d'une position centrale à laquelle l'axe de ce pivot est parallèle à l'axe de cet arbre.

2. Bobine d'enroulement suivant la revendication 1, caractérisée par le fait que le couvercle comporte une paroi latérale semi-cylindrique, un fond qui porte la denture frontale d'arrêt, une bride radiale servant à la fixation au corps de support en une série de positions angulaires et un appendice plat qui part tangentiellement d'une extrémité de la paroi latérale, ledit appendice comportant un trou destiné à recevoir un support qui porte le pivot d'articulation du cliquet et des moyens servant à maintenir ce support en une série de positions angulaires autour d'un axe perpendiculaire au plan dudit appendice.

3. Bobine d'enroulement suivant la revendication 2, caractérisée par le fait que le support qui porte le pivot d'articulation du cliquet est constitué par un corps en matière plastique, d'un seul tenant avec une lamelle élastique munie de saillies, ou bossages, destinés à s'engager d'un coup sec dans une série de sièges concentriques au trou porté par l'appendice plat du couvercle.

4. Bobine d'enroulement suivant la revendication 2, caractérisée par le fait que la bride radiale du couvercle est munie en son centre, d'un appendice longitudinal que l'on peut engager à volonté dans un trou qui fait partie d'une série de trous concentriques à l'axe du couvercle et d'une paire de trous extrèmes servant au passage de deux vis destinées à être vissées dans des trous taraudés correspondants qui font partie d'une série de trous taraudés, concentriques à l'axe du couvercle.

5. Bobine d'enroulement suivant la revendication 1, caractérisée par le fait que l'anneau denté muni de la denture radiale d'arrêt est monté de façon à tourner avec frottement sur la roue dentée.

6. Bobine d'enroulement suivant la revendication 5, caractérisée par le fait que la roue dentée comporte, sur sa surface extérieure, une rainure annulaire, par le fait que l'anneau denté comporte sur sa surface interne une rainure annulaire analogue et par le fait que, dans la chambre délimitée par ces deux rainures, est monté un anneau qui peut se dilater élastiquement.

7. Bobine d'enroulement suivant la revendication 1, caractérisée par le fait qu'entre le couvercle et la roue dentée est disposé un ressort hélicoïdal qui a tendance à maintenir l'accouplement à dents frontales en position dégagée.

8. Bobine d'enroulement suivant la revendication 1, caractérisée par le fait que pour coopérer avec le couvercle l'extrémité de l'arbre tournant dans le corps de support s'étend longitudinalement en porte-à-faux jusqu'à l'extérieur du corps de support, ladite extrémité comprenant une partie de plus grand diamètre, dans laquelle est pratiquée une couronne périphérique de dents frontales séparées les unes des autres par des surfaces inclinées qui vont de la base de chacune des dents jusqu'à peu près à mi-hauteur de la dent suivante, et une partie terminale de diamètre réduit, dirigée vers l'extérieur à partir du sommet des dents, et par le fait que la roue dentée présente, sur sa face tournée vers le corps de support, une couronne périphérique de dents frontales qui s'engagent dans les vides compris entre les dents frontales portées par l'extrémité de l'arbre et qui ont chacune une amplitude angulaire plus petite que celle du vide correspondant, de telle sorte que le déplacement angulaire relatif entre la roue dentée et l'arbre provoque un déplacement longitudinal de la roue dentée par rapport à cet arbre, les deux positions angulaires extrêmes de la roue dentée par rapport à l'arbre étant déterminées par l'interraction entre les flancs des dents de la roue et les flancs des dents de l'ex-trémité de l'arbre.

0118650

FIG. 1

FIG. 5

FIG. 6

FIG. 2

FIG. 4

FIG. 3

0118650